Europäisches Patentamt

European Patent Office

Office européen des brevets

(11) Publication number: **0 516 176 A2**

# EUROPEAN PATENT APPLICATION

(21) Application number: **92109152.6**

(22) Date of filing: **30.05.92**

(51) Int. Cl.5: **G06F 15/16**

(30) Priority: **30.05.91 JP 127496/91**

(43) Date of publication of application:
**02.12.92 Bulletin 92/49**

(84) Designated Contracting States:
**DE FR GB**

(71) Applicant: **KABUSHIKI KAISHA KIRIN TECHNO SYSTEM**
**17-1, Namamugi 1-chome, Tsurumi-ku**
**Yokohama-shi, Kanagawa-ken(JP)**

(72) Inventor: **Fukuchi, Hiroyuki, K.K. Kirin Techno System**
**17-1, Namamugi 1-Chome, Tsurumi-ku**
**Yokohama-shi, Kanagawa-ken 230(JP)**
Inventor: **Kikuchi, Masaki, K.K. Kirin Techno System**
**17-1, Namamugi 1-Chome, Tsurumi-ku**
**Yokohama-shi, Kanagawa-ken 230(JP)**
Inventor: **Miwa, Yasuo, K.K. Kirin Techno System**
**17-1, Namamugi 1-Chome, Tsurumi-ku**
**Yokohama-shi, Kanagawa-ken 230(JP)**

(74) Representative: **Reichel, Wolfgang, Dipl.-Ing. et al**
**Reichel und Reichel Parkstrasse 13**
**W-6000 Frankfurt am Main 1(DE)**

(54) **Hierarchical structured module system.**

(57) A hierarchical structured module system comprising: a first bus line connected to a CPU; a second bus line connected to the first bus line through a bus interface; a common unit connected to the second bus line; and a plurality of individual units connected to the common unit, each of the individual units including a plurality of circuit substrates for doing functions assigned thereto and a common substrate connected to the respective circuit substrates, the CPU outputting to the first bus line a unit number and a substrate number for selecting one out of the circuit substrates for doing a required one of the functions, the common unit selecting, based on the unit number from the CPU, one of the individual unit indicated by the unit number, and connecting the second bus line to the selected individual unit, the common substrate of the individual unit selected by the common unit and connected to the second bus line selecting, based on the substrate number from the CPU, one of the associated circuit substrates indicated by the substrate number.

FIG. 1

## BACKGROUND OF THE INVENTION

The present invention related to a hierarchical structured module system having a number of circuit substrates for doing a job hierarchically structured.

In constructing a large system for doing a complicated job using a number of circuit substrates, functions of the job are assigned to the respective circuit substrates, and the functions are integrated for the system as a whole to achieve the job. In the conventional system, where a number of circuit substrates included in the system are simply integrated to form the system, when the CPU writes and reads data in and from the respective circuit substrates, the CPU has to directly access the respective circuit substrates. To this end, the CPU has to administer addresses of the circuit substrates, and its administration is very complicated. Every time a number of the circuit substrates is increased or decreased in accordance with design changes, the administration addresses of the CPU have to be changed. In spite of careful address administration, errors, such as conflicts among bus lines, tend to take place.

In the conventional system thus using a number of circuit substrates, the address administration of a number of circuit substrates is so complicated that errors, such as conflicts among bus lines, tend to occur.

## SUMMARY OF THE INVENTION

An object of the present invention is to provide is to provide a hierarchical structured module system in which a number of circuit substrates can be simply administered, and no conflicts among bus lines take place.

The above described objects can be achieved by the hierarchical structure module system comprising a first bus line connected to a CPU; a second bus line connected to the first bus line through a bus interface; a common unit connected to the second bus line; and a plurality of individual units connected to the common unit, each of the individual units including a plurality of circuit substrates for doing functions assigned thereto and a common substrate connected to the respective circuit substrates, the CPU outputting to the first bus line a unit number and a substrate number for selecting one out of the circuit substrates for doing a required one of the functions, the common unit selecting, based on the unit number from the CPU, one of the individual unit indicated by the unit number, and connecting the second bus line to the selected individual unit, the common substrate of the individual unit selected by the common unit and connected to the second bus line selecting, based on the substrate number from the CPU, one of the associated circuit substrates indicated by the substrate number.

According to the present invention, a hierarchical structure can be formed by the unit of a number of circuit substrates. Consequently a number of circuit substrates can be efficiently administered.

## BRIEF DESCRIPTION OF THE DRAWINGS

FIG. 1 is a block diagram of the hierarchical structured module system according to one embodiment of the present invention; and
FIG. 2 is a block diagram of the hierarchical structured module system according to one embodiment of the present invention.

## DETAILED DESCRIPTION OF THE INVENTION

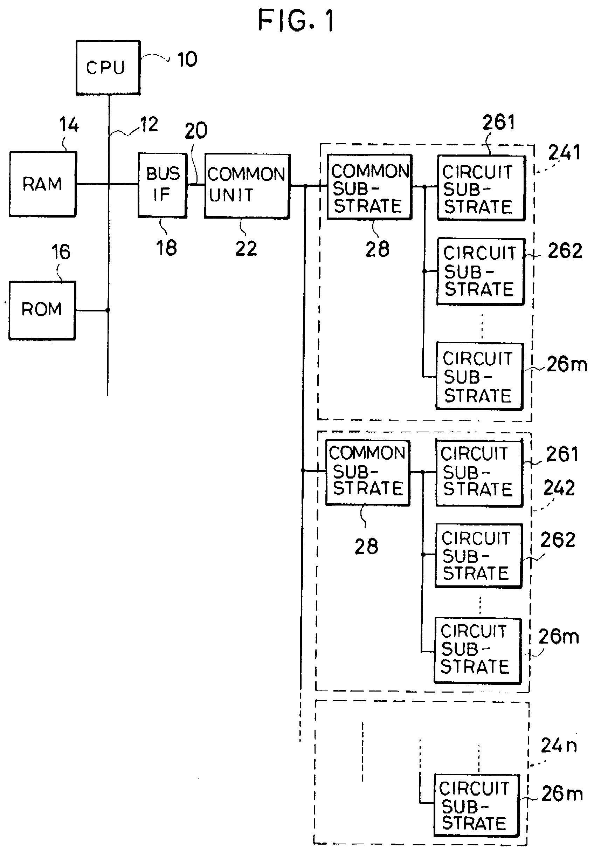

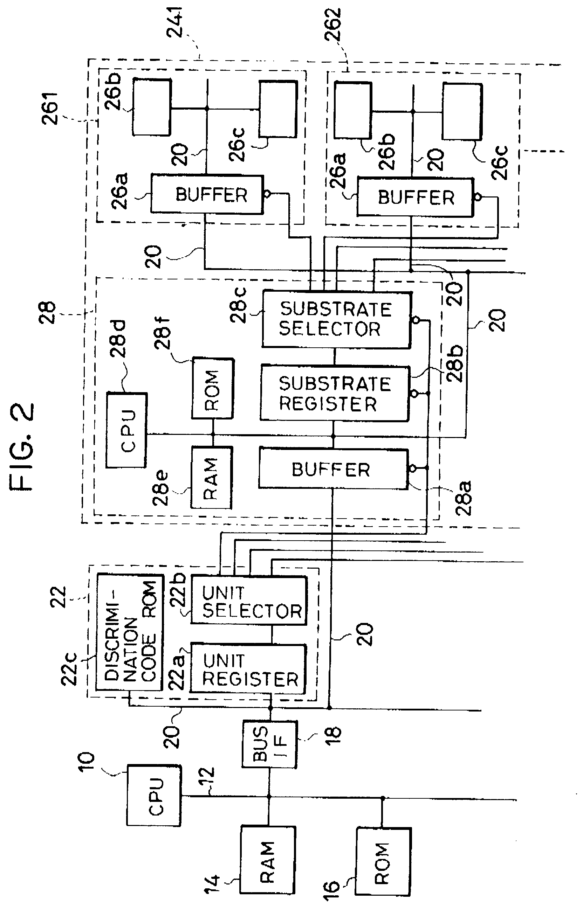

The hierarchical structured module system according to one embodiment of the present invention will be explained with reference to FIGs. 1 and 2.

A CPU 10 controls the entire of the hierarchical structured module system. The CPU 10 has a system bus line 12. This system bus line 12 is connected to a RAM 14, a ROM 16 and so on for storing programs, data and so on.

The system bus line 12 is connected to a local bus line 20 through a bus interface 18. The local bus line 20 is connected to a common unit 22. The common unit 22 is connected to a plurality of individual units 241, 242, ..., 24n for doing respective assigned functions of a job. The individual unit 241, 242, ..., 24n are for cooperatively performing a single big job. For example, if a bottle inspecting device is provided by the hierarchical module system according to this embodiment, the individual units 241, 242, ..., 24n will be a bottle body inspecting unit for inspecting the body or sidewall of a bottle, a bottle mouth top inspecting unit for inspecting the top of the mouth of the bottle, a bottle bottom inspecting unit for inspecting the bottom of the bottle, and so on.

Each of the individual units 241, 242, ..., 24n includes a plurality of circuit substrates 261, 262, ..., 26m for performing respective set functions, and a common substrate 28 which is common among the circuit substrates 261, 262, ..., 26m. The circuit substrates 261, 262, ..., 26m are so divided that each of the circuit substrates can afford to do a part of a function of a job assigned to their associated unit 241, 242, ..., 24n. The functions done by the respective circuit substrates 261, 262, ..., 26m are integrated to do the function assigned to the associated unit 241, 242, ..., 24n.

The operation of the hierarchical structured module system according to this embodiment will be briefly explained.

The CPU 10 outputs to the system bus line 12 a unit number i and a substrate number j to access a specific circuit substrate 261, 262, ..., 26m of a specific individual unit 241, 242, ..., 24n which does a required function. Based on the unit number i from the CPU 10, the common unit 22 selects a unit 24i represented by the unit number i out of the units 241, 242, ..., 24n, and connects the local bus line 20 to the unit 24i.

The common substrate 28 associated with the individual unit 24i selected by the common unit 22 and connected to the local bus line 20 selects, based on the substrate number j from the CPU 10, a circuit substrate 26j represented by the substrate number j out of the circuit substrates 261, 262, ..., 26m, and connects the local bus line 20 to the circuit substrate 26j.

Thus the CPU 10 can access a specific circuit substrate, based on a unit number and a substrate number. A number of circuit substrates are hierarchically structured and can be systematically administered.

With reference to FIG. 2, the hierarchical structured module system according to this embodiment will be more detailed below.

The common unit 22 includes a unit register 22a connected to the local bus line 20, and a unit selector 22b connected to the unit register 22a. A unit number i outputted by the CPU 10 to the system bus line 12 is outputted to the local bus line 20 via the bus interface 18, and held by the unit register 22a. The unit selector 22b outputs, based on the unit number i held by the unit register 22a, an enable signal to the individual unit 24i represented by the unit number i.

The common unit 22 further includes a discrimination code ROM 22c which stores discrimination codes for discriminating set functions (e.g., bottle body or side inspecting function, bottle mouth inspecting function, bottle bottom inspecting function and so on) assigned to the individual units 241, 242, ... 24n of the hierarchical structured module system according to this embodiment. When the hierarchical structured module system is actuated, the CPU 10 reads contents of the discrimination code ROM 22c to discriminate the functions of the individual units 241, 242, ... 24n.

The common substrate 28 of each of the individual units 241, 242, ..., 24n includes a bus line buffer 28a, a substrate register 28b connected to the bus line buffer 28a, a substrate selector 22c connected to the substrate register 28b. The bus line buffer 28a, the substrate register 28b and the substrate selector 28c are allowed to operate when an individual unit 241, 242, ..., 24n associated therewith is selected, and an enable signal is outputted from the unit selector 22b of the common unit 22.

When an enable signal is outputted from the unit selector 22b of the common unit 22, the bus line buffer 28a allows the local bus line 20 to be connected to the common substrate 28. A substrate number j outputted from the CPU 10 to the system bus line 12 is held by the substrate register 28b via the bus line buffer 28a. Based on the substrate number j held by the substrate register 28c, the substrate selector 28c outputs an enable signal to a circuit substrate 26j represented by the substrate number j.

A CPU 28d, a RAM 28e and a ROM 28f are connected to the local bus line 20 connected to the bus line buffer 28a in the common substrate 28, so that processing can be performed in the common substrate 28 independently of the main CPU 10.

Each of the circuit substrates 261, 262, ..., 26m of each individual unit 241, 241, ..., 24n has a bus line buffer 26a connected to the local bins line 20. The bus line buffer 26a allows the local bus line 20 to be connected to a circuit substrate 261, 262, ..., 26m when a circuit substrate 261, 262, ..., 26m associated therewith is selected, and an enable signal is outputted from the substrate selector 28c of the common substrate 28. And function blocks 26b, 26c, ... in the circuit substrate 261, 262, ..., 26m is actuated.

When the CPU 10 outputs a unit number i and a substrate number j indicative of an individual unit 24i and a circuit substrate 26j to be accessed, the local bus line 20 connected to the system bus line 12 through the bus interface 18 is connected to the circuit substrate 26j via the bus line buffer 28a of the common substrate 28 of the individual unit 24i and the bus line buffer 26a of the circuit substrate 263. And the CPU 10 writes and reads data from and in a required register (not shown) of the circuit substrate 26j.

Thus, according to this embodiment, the hierarchical structure is formed by the unit of a plurality of circuit substrates integrated to perform their respective assigned functions of a job, and the circuit substrates are accessed based on a unit number and a substrate number. Consequently the administration of the circuit substrates is not complicated, as has been conventionally, and a number of circuit substrates can be hierarchically structured and thus administered systematically and efficiently. In increasing or decreasing a number of circuit substrates in accordance with a design change, the change can be made by the unit of individual unit. Consequently in accordance with design changes, administration of the circuit substrates can be easily changed. Furthermore, according to this embodiment, the circuit substrates are accessed based on a unit number and a substrate number. Consequently bus lines do not conflict, as have done conventionally. In addition, each individual unit can perform its own processing using the local bus line in itself independently of the main CPU. Consequently the processing can be distributed.

The present invention is not limited to the above-described embodiment and includes various variations.

For example, in the above-described embodiment, discrimination codes for discriminating set functions assigned to the individual units are stored by the ROM in the common units, but it is possible that the memory means, such as a ROM or others in the main CPU, store the discrimination codes.

The above-described embodiment has the two-stage hierarchical structure including a plurality of individual units associated with the common unit, and a plurality of circuit substrates associated with each of the individual units. It is possible that more-stage hierarchical structure is formed for more complicated systems.

**Claims**

1. A hierarchical structured module system comprising:
    a first bus line connected to a CPU;
    a second bus line connected to the first bus line through a bus interface;
    a common unit connected to the second bus line; and
    a plurality of individual units connected to the common unit, each of the individual units including a plurality of circuit substrates for doing functions assigned thereto and a common substrate connected to the respective circuit substrates,
    the CPU outputting to the first bus line a unit number and a substrate number for selecting one out of the circuit substrates for doing a required one of the functions,
    the common unit selecting, based on the unit number from the CPU, one of the individual unit indicated by the unit number, and connecting the second bus line to the selected individual unit,
    the common substrate of the individual unit selected by the common unit and connected to the second bus line selecting, based on the substrate number from the CPU, one of the associated circuit substrates indicated by the substrate number.

2. A hierarchical structured module system according to claim 1, wherein
    the common unit includes:
    a unit register for holding a unit number outputted by the CPU, and
    a unit selector for outputting, based on the unit number held by the unit register, an enable signal to the individual unit indicated by the unit number;
    the common substrate associated with each of the individual units includes:
    a bus line buffer for allowing, based on the enable signal from the unit selector, the second bus line to be connected to the individual unit indicated by the unit number,
    a substrate register connected to the bus line buffer for holding a substrate number outputted from the CPU, and
    a substrate selector for outputting, based on the substrate number held by the substrate register, an enable signal to the circuit substrate indicated by the substrate number; and
    each of the individual units includes a bus line buffer for allowing, based on the enable signal from the substrate selector, the second bus line to be connected to the circuit substrate indicated by the substrate number.

3. A hierarchical structured module system according to claim 1,
    further comprising discrimination code memory means for storing a discrimination code for discriminating a function of the connected individual unit,
    a discrimination code stored by the discrimination code memory means being read by the CPU to discriminate the connected individual unit.

4. A hierarchical structured module system according to claim 2,
    further comprising discrimination code memory means for storing a discrimination code for discriminating a function of the connected individual unit,
    a discrimination code stored by the discrimination code memory means being read by the CPU to discriminate the connected individual unit.

# FIG. 1

# FIG. 2